# EUROPEAN PATENT APPLICATION

(11) **EP 4 542 376 A1**
(43) Date of publication of application: **23.04.2025**
(21) Application number: 23826243.0
(22) Date of filing: 14.06.2023
(51) Int. Cl.: G06F 8/65

(54) **TERMINAL, OPERATING SYSTEM SWITCHING METHOD, AND STORAGE MEDIUM**

(30) Priority: 21.06.2022 CN 202210718146
(71) Applicant: ZTE Corporation, Shenzhen, Guangdong 518057 (CN)
(72) Inventor: WU, Zhiqin, Shenzhen, Guangdong 518057 (CN); LIU, Chenggang, Shenzhen, Guangdong 518057 (CN)
(74) Representative: Ziebig Hengelhaupt Intellectual Property Attorneys Patentanwaltskanzlei PartGmbB
(86) International application number: PCT/CN2023/100231
(87) International publication number: WO 2023/246594

(57) **Abstract**

The present application provides a terminal, an operating system switching method, and a storage medium. The terminal comprises: a first storage partition (100) used for storing upgrade packages, wherein an upgrade package of a second operating system is downloaded by the terminal after obtaining a system switching instruction to the first storage partition (100) by means of a first operating system; a second storage partition (200) used for storing a boot loader (BootLoader), wherein the terminal finally updates the BootLoader to a BootLoader of the second operating system; and a third storage partition (300) used for storing authentication data, the authentication data being used for authenticating the validity of the terminal, so that the terminal runs the second operating system after validity verification is successful.

## Description

### CROSS-REFERENCE TO RELATED APPLICATIONS

The disclosure is filed on the basis of Chinese Patent Application No.202210718146.4 filed on June 21, 2022 and claims the priority to the Chinese Patent Application, which is incorporated in its entirety herein by reference.

### TECHNICAL FIELD

The disclosure relates to, but is not limited to, the technical field of operating systems, and particularly relates to a terminal, an operating system switching method, and a storage medium.

### BACKGROUND

One terminal can be provided with different operating systems. For example, a set-top box device can be provided with a Linux operating system or an Android operating system. In order to satisfy user's functional requirements for different operating systems, a traditional method is to simultaneously deploy a plurality of operating systems at a terminal, such that the operating systems can be selected by users as required. However, due to a large data size of an operating system, a vast storage space will be required by simultaneously deploying a plurality of operating systems, and high hardware cost will be produced. To reduce the hardware cost, different systems can be switched through system upgrade. Because file systems of different operating systems are probably inconsistent in existing upgrade methods, an upgrade package and data of an old system need to be transferred to internal storage at first, a boot loader (Bootloader) is upgraded, then data in the internal storage is transferred to Flash or a new file system after system restart, and finally a new version is loaded and started. However, if a terminal is powered off before the data in the internal storage is written into the new file system, the data in the internal storage will be completely lost, and a device will be unusable.

### SUMMARY

A summary of a subject matter described in detail herein will be provided below. The summary is not intended to limit the protection scope of the claims.

Examples of the disclosure provide a terminal, an operating system switching method, and a storage medium.

In a first aspect, an example of the disclosure provides a terminal. The terminal includes: a first storage partition configured to store upgrade packages, where an upgrade package of a second operating system is downloaded to the first storage partition through a first operating system after a system switching instruction is obtained by the terminal, the first operating system is an operating system currently run by the terminal, and the second operating system is an operating system that the terminal can switch to; a second storage partition configured to store a boot loader (BootLoader), where the terminal finally updates the BootLoader stored in the second storage partition to a BootLoader of the second operating system in an upgrade and update process according to the upgrade package of the second operating system; and a third storage partition configured to store authentication data, where the authentication data is configured to authenticate validity of the terminal, such that the terminal runs the second operating system after validity verification is successful.

In a second aspect, an example of the disclosure provides an operating system switching method. The method is applied to the terminal according to the first aspect. The method includes: downloading, in response to obtaining a system switching instruction, an upgrade package of a second operating system through a first operating system, and storing the upgrade package in a first storage partition, where the first operating system is an operating system currently run by the terminal, and the second operating system is an operating system that the terminal can switch to; conducting upgrade and update according to the upgrade package of the second operating system, and finally updating a BootLoader stored in a second storage partition to a BootLoader of the second operating system; and obtaining authentication data from a third storage partition, conducting validity verification according to the authentication data, and running the second operating system after validity verification is successful.

In a third aspect, an example of the disclosure provides a terminal. The terminal includes: a memory, a processor, and a computer program stored in the memory and runnable on the processor. When the computer program is executed by the processor, the operating system switching method according to the second aspect is implemented.

In a fourth aspect, an example of the disclosure provides a computer-readable storage medium, which stores a computer-executable instruction. The computer-executable instruction is configured to execute the operating system switching method according to the second aspect.

### BRIEF DESCRIPTION OF DRAWINGS

Fig. 1 is a schematic diagram of partitions of a terminal according to one example of the disclosure;
Fig. 2 is a schematic diagram of partitions of a terminal according to another example of the disclosure;
Fig. 3 is a schematic diagram of partitions of a terminal according to yet another example of the disclosure;
Fig. 4 is a flow diagram of an operating system switching method according to yet another example of the disclosure;
Fig. 5 is a flow diagram of deploying an upgrade file according to yet another example of the disclosure;
Fig. 6 is a flow diagram of deleting user data according to yet another example of the disclosure;
Fig. 7 is a flow diagram of obtaining authentication data according to yet another example of the disclosure;
Fig. 8 is a flow diagram of postprocessing for power failure according to yet another example of the disclosure;
Fig. 9 is a schematic diagram of a first instance according to yet another example of the disclosure;
Fig. 10 is a flow diagram of a second instance according to yet another example of the disclosure; and
Fig. 11 is a setup diagram of a terminal according to still another example of the disclosure.

### DETAILED DESCRIPTION

It should be noted that although functional modules are divided in a schematic diagram of an apparatus and a logical sequence is shown in a flow diagram, in some cases, the steps shown or described can be executed through module division different from that in the apparatus or in an order other than that in the flow diagram. The terms such as "first" and "second" in the description, claims and the accompanying drawings are used to distinguish similar objects, but are not necessarily used to describe a specific sequence or a precedence order.

The disclosure provides a terminal, an operating system switching method, and a storage medium. The terminal includes: a first storage partition configured to store upgrade packages, where an upgrade package of a second operating system is downloaded to the first storage partition through a first operating system after a system switching instruction is obtained by the terminal, the first operating system is an operating system currently run by the terminal, and the second operating system is an operating system that the terminal can switch to; a second storage partition configured to store a boot loader (BootLoader), where the terminal finally updates the BootLoader stored in the second storage partition to a BootLoader of the second operating system in an upgrade and update process according to the upgrade package of the second operating system; and a third storage partition configured to store authentication data, where the authentication data is configured to authenticate validity of the terminal, such that the terminal runs the second operating system after validity verification is successful. According to the technical solution of the example, the upgrade package may be stored in the first storage partition, and the BootLoader may be finally updated in the upgrade process. Thus, data loss after power failure is effectively avoided, and integrity of data can be effectively ensured after validity verification is conducted on a device of the terminal according to the authentication data, such that stability of system switching is improved.

The technical solutions of all the examples of the disclosure will be further described below with reference to the accompanying drawings.

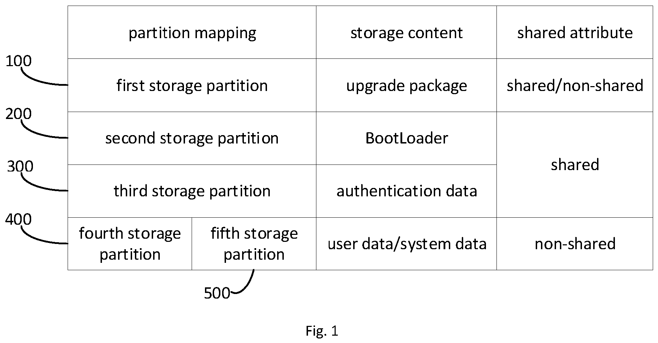

As shown in Fig. 1, Fig. 1 shows a terminal according to one example of the disclosure. The terminal includes:
a first storage partition 100, where the first storage partition 100 is configured to store upgrade packages, an upgrade package of a second operating system is downloaded to the first storage partition 100 through a first operating system after a system switching instruction is obtained by the terminal, the first operating system is an operating system currently run by the terminal, and the second operating system is an operating system that the terminal can switch to;
a second storage partition 200, where the second storage partition 200 is configured to store a BootLoader, and the terminal updates the BootLoader stored in the second storage partition 200 to a BootLoader of the second operating system after update is completed according to the upgrade package of the second operating system; and
a third storage partition 300, where the third storage partition 300 is configured to store authentication data, and the authentication data is configured to authenticate validity of the terminal, such that the terminal runs the second operating system after validity verification is successful.

It should be noted that each storage partition of the example may be configured in a nonvolatile storage device of the terminal, such that it is ensured that all data cannot be lost after the terminal is powered off, and integrity of data is effectively improved. The example does not limit a specific type of the nonvolatile storage device excessively.

It should be noted that a naming method and a number of all the storage partitions are not limited by the example. Those skilled in the art may name each storage partition according to specific requirements and increase a number of various storage partitions according to a size of the stored data. For instance, in a case that the upgrade package of the second operating system has a large data size, a plurality of first storage partitions 100 may be configured to store the upgrade packages. In a case with large authentication data, a plurality of third storage partitions may be configured to store the authentication data. Those skilled in the art are familiar with a method for adjusting a number of storage partitions so as to satisfy data storage requirements, which is not limited herein.

It is worth noting that the upgrade package stored in the first storage partition 100 may be downloaded from a server. For instance, a current operating system of the terminal is the first operating system. When the system switching instruction is obtained by the terminal, the upgrade package of the second operating system is downloaded from the server in a case that the first operating system runs, and the upgrade package is stored to the corresponding first storage partition 100. A specific downloading method is well known to those skilled in the art, and will not be repeated herein. It is worth noting that after downloading of the upgrade package is completed, signature verification and integrity verification may also be conducted on the upgrade package, such that validity of the downloaded upgrade package and integrity of data are ensured.

It should be noted that the second storage partition 200 is configured to store the BootLoader. In the example, after the upgrade package of the second operating system is obtained, other partitions are updated according to the upgrade package, and finally the BootLoader is updated to the BootLoader of the second operating system. In a case with power failure in an update process, the BootLoader may re-obtain the upgrade package from the first storage partition 100 for upgrade, such that update failure caused by power failure is effectively avoided, and stability of upgrade of the operating system is effectively improved. It should be noted that the BootLoader stored in the second storage partition 200 may be a mirror image file of the BootLoader. A specific data type is not limited by the example.

It should be noted that the authentication data may be unique data of each terminal, and may be configured to verify validity of the terminal. For instance, regarding an Android television (ATV) system, Widevine Key enables a device to conduct identity verification and obtain a license configured to decrypt a content protected by digital rights mangement (DRM), and is differential system data that each terminal using an ATV operating system must have. Thus, the Widevine Key may be used as the authentication data, or a certification authority (CA) certificate may be used. A specific authentication data type may be determined according to a type of the operating system. It should be noted that in order to improve security, the authentication data is data that is difficult to obtain and is stored in the third storage partition with high security, such as the CA certificate and the Widevine Key. Although each device has unique data such as a serial number of a device, the data may be easily obtained, and is low in security. Thus, this kind of data is not used as the authentication data.

It should be noted that the third storage partition 300 may be a replay protected memory block (RPMB) or another user-defined storage partition, such that security of the third storage partition can be ensured, and the third storage partition is configured to store the authentication data. In the example, a number and a form of the third storage partitions 300 are not limited excessively.

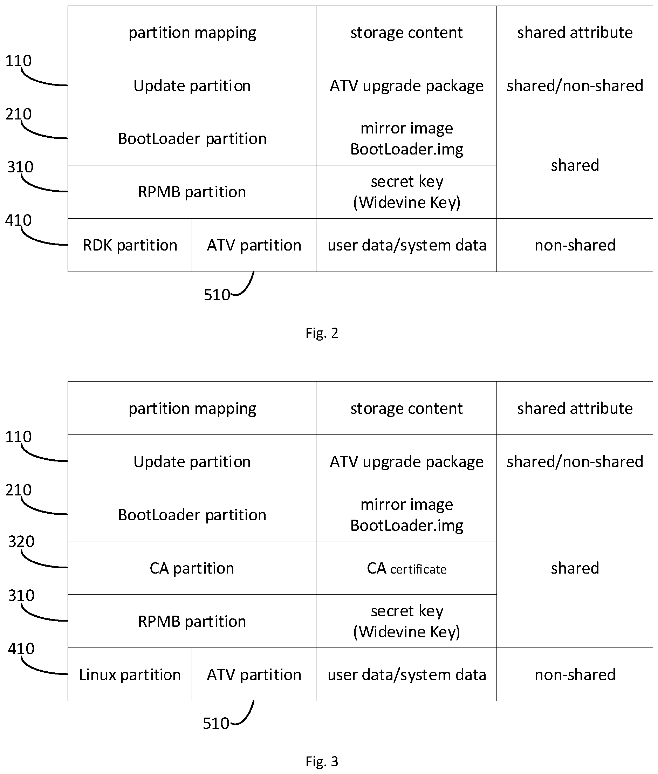

For instance, as shown in Fig. 2, in a case that the first operating system is a D-robotics developer kits (RDK) operating system and the second operating system is an ATV operating system, the first storage partition may be an update partition 110, the second storage partition may be a BootLoader partition 210, and the third storage partition may be an RPMB partition 310. The update partition 110 stores an ATV upgrade package, the BootLoader partition 210 stores a mirror image file of the BootLoader, and the RPMB partition 310 stores the Widevive Key of the terminal. As shown in Fig. 3, the first operating system is a Linux operating system, the second operating system is an ATV operating system, the first storage partition may be the update partition 110, the second storage partition may be the BootLoader partition 210, and the third storage partition may include the RPMB partition 310 and a CA partition 320. The update partition 110 stores the ATV upgrade package, the BootLoader partition 210 stores the mirror image file of the BootLoader, the RPMB partition 310 stores the Widevive Key of the terminal, and the CA partition 320 stores the CA certificate. What are described above is all instances of a terminal file system, and do not limit each storage partition.

In addition, in an example, the authentication data is differential system data. The differential system data is system data exclusive to the terminal and belonging to the second operating system. Alternatively, the authentication data is not differential system data. The differential system data is downloaded after validity verification is conducted by the terminal according to the authentication data.

It should be noted that under a same operating system, system data of different terminals generally includes general system data and differential system data. The general system data is same system data in each terminal, and may be downloaded through the upgrade package and updated to the corresponding storage partition. The differential system data is system data required by the second operating system, and is exclusive to each terminal. The differential system data is not generally used by all terminals, so the differential system data needs to be downloaded separately. In a case that the authentication data is the differential system data, it may be determined that the terminal has the differential system data, such that the second operating system may be directly run. In a case that the authentication data is not differential data, it may be determined that the terminal lacks the differential system data, and the terminal may download the differential system data from the server after the server completes validity verification through the authentication data. Thus, security of data is effectively improved, and it is ensured that the terminal has all system data required by the second operating system.

For instance, with reference to Fig. 3, the first operating system is a Linux system, and the second operating system is an ATV system. The authentication data of the ATV system may be the Widevine Key, and the Widevine Key needs to be obtained after an ATV project is established, and may not be obtained when the terminal is produced. In this case, since the terminal stores the CA certificate in the CA partition 320, the Widevine Key may be applied and transmitted to the server according to the CA certificate after an upgrade instruction of the ATV operating system is obtained. After the server verifies that the terminal is a valid terminal according to the CA certificate, the corresponding Widevine Key may be transmitted and saved to the RPMB partition 310 for use in a later upgrade process.

In addition, in an example, the second storage partition 200 and the third storage partition 300 are shared by at least the first operating system and the second operating system. Each second storage partition 200 has consistent storage space attributes, each third storage partition 300 has consistent storage space attributes, and the storage space attributes include a storage space size and an offset.

It should be noted that in the upgrade process, data of the second storage partition 200 and the third storage partition 300 needs to be invoked by different operating systems. For instance, before upgrade is completed, the first operating system needs to update the BootLoader in the second storage partition 200. For another instance, in a case that the first operating system runs, validity of the second operating system is verified according to the authentication data of the third storage partition 300. Thus, the second storage partition 200 and the third storage partition 300 need to be shared by various operating systems, so as to ensure that the corresponding data may be read during upgrade.

It is worth noting that a space size and an offset of each second storage partition 200 are consistent, a space size and an offset of each third storage partition 300 are consistent, and each second storage partition 200 and each third storage partition 300 may be correctly recognized and read by different operating systems.

In addition, in an example, the terminal further includes at least one fourth storage partition 400. The fourth storage partition 400 is configured to store general system data and/or user data of the first operating system. The fourth storage partition 400 is exclusive to the first operating system.

Alternatively, the terminal further includes at least one fifth storage partition 500. The fifth storage partition 500 is configured to store general system data and/or user data of the second operating system. The fifth storage partition 500 is exclusive to the second operating system.

It should be noted that data between different operating systems is generally incompatible. Thus, in order to ensure normal operation of the operating systems, an exclusive partition needs to be allocated to each of the operating systems in a file system, and is configured to store general system data and/or user data. For instance, in the example, several fourth storage partitions 400 are allocated to the first operating system, and several fifth storage partitions 500 are allocated to the second operating system. A number and a size of the fourth storage partitions 400 may be adjusted according to actual needs of the general system data and the user data, and the adjustment method is similar to that of the fifth storage partitions 500, which is not limited herein.

For instance, as shown in Fig. 2, the first operating system is an RDK system, the second operating system is an ATV system, an RDK partition 410 is used as the fourth storage partition, and an ATV partition 510 is used as the fifth storage partition. As shown in Fig. 3, the first operating system is the Linux system, the second operating system is the ATV system, a Linux partition 420 is used as the fourth storage partition, and the ATV partition 510 is used as the fifth storage partition. A specific partition naming method may be determined according to actual needs of the operating systems.

It is worth noting that the fourth storage partition 400 and the fifth storage partition 500 do not exist simultaneously. When the terminal runs the first operating system, a partition in the device is the fourth storage partition 400. Similarly, when the terminal runs the second operating system, a partition in the device is the fifth storage partition 500. It is worth noting that after switching of the operating systems is completed, user data of an old operating system may be deleted to improve a use ratio of the storage space.

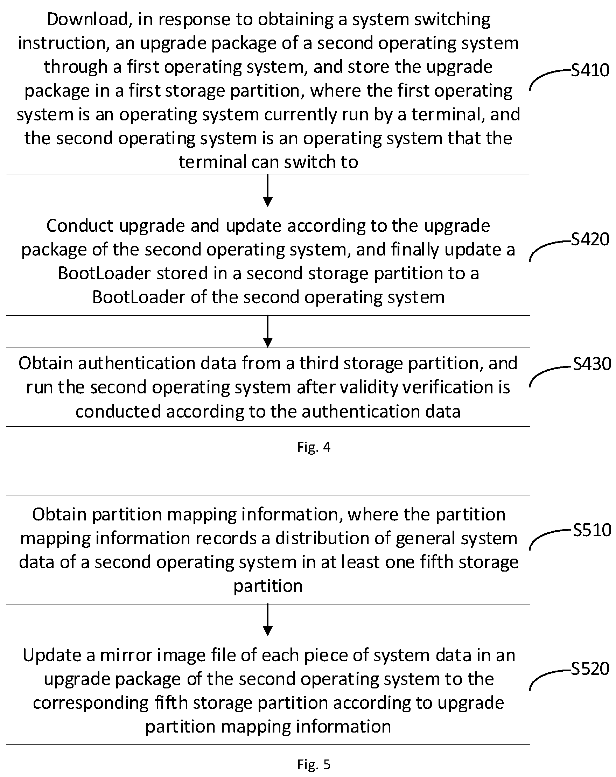

In addition, an example of the disclosure further provides an operating system switching method. The method is applied to the terminal. With reference to Fig. 4, the operating system switching method includes, but is not limited to, the following steps:
S410, in response to obtaining a system switching instruction, an upgrade package of a second operating system is downloaded through a first operating system and stored in a first storage partition, where the first operating system is an operating system currently run by the terminal, and the second operating system is an operating system that the terminal can switch to;
S420, upgrade and update are conducted according to the upgrade package of the second operating system, and finally a BootLoader stored in a second storage partition is updated to a BootLoader of the second operating system; and
S430, authentication data is obtained from a third storage partition, and the second operating system is run after validity verification is conducted according to the authentication data.

It should be noted that, with a case of switching the first operating system to the second operating system through upgrade as an example, certainly, the example may use a same method to switch the operating system to the first operating system or other operating systems in a case that the terminal runs the second operating system, which will not be repeated herein.

It should be noted that the upgrade package stored in the first storage partition may be downloaded from a server. For instance, a current operating system of the terminal is the first downloaded from a server. For instance, a current operating system of the terminal is the first operating system. When the system switching instruction is obtained by the terminal, the upgrade package of the second operating system is downloaded from the server in a case that the first operating system runs, and the upgrade package is stored to the corresponding first storage partition. A specific downloading method is well known to those skilled in the art, and will not be repeated herein. It is worth noting that after downloading of the upgrade package is completed, signature verification and integrity verification may also be conducted on the upgrade package, such that validity of the downloaded upgrade package and integrity of data are ensured.

It should be noted that the second storage partition is configured to store the BootLoader. In the example, after the upgrade package of the second operating system is obtained, other storage partitions are updated, and finally the BootLoader is updated to the BootLoader of the second operating system. In a case with power failure in an update process, the BootLoader may re-obtain the upgrade package from the first storage partition for upgrade, such that update failure caused by power failure is effectively avoided, and stability of upgrade of the operating system is effectively improved. It should be noted that the BootLoader stored in the second storage partition may be a mirror image file of the BootLoader. A specific data type is not limited by the example.

It should be noted that the authentication data may be unique data of each terminal. For instance, regarding an ATV system, Widevine Key enables a device to conduct identity verification and obtain a license configured to decrypt a content protected by DRM, and is differential system data that each terminal using an ATV operating system must have. Thus, the Widevine Key may be used as the authentication data, or a CA certificate may be used. A specific authentication data type may be determined according to a type of the operating system. It should be noted that in order to improve security, the authentication data is data that is difficult to obtain and is stored in the third storage partition with high security, such as the CA certificate and the Widevine Key. Although each device has unique data such as a serial number of a device, the data may be easily obtained, and is low in security. Thus, this kind of data is not used as the authentication data.

In addition, in an example, the terminal further includes at least one fifth storage partition. The fifth storage partition is configured to store general system data and/or user data of the second operating system. The general system data is system data generally used by different terminals. With reference to Fig. 5, S420 of the example shown in Fig. 4 further includes, but is not limited to, the following steps:
S510, partition mapping information is obtained, where the partition mapping information records a distribution of the general system data of the second operating system in the at least one fifth storage partition; and
S520, a mirror image file of each piece of system data in the upgrade package of the second operating system is updated to the corresponding fifth storage partition according to upgrade partition mapping information.

It should be noted that the upgrade package of the operating system generally includes mirror image files of various general system data. In order to update the general system data to the file system, each piece of the partition mapping information may be obtained firstly, a distribution of each mirror image file in the fifth storage partition may be determined, and then each mirror image file may be updated to a corresponding storage zone sequentially through Uboot after restart, such that file deployment of the upgrade package is implemented.

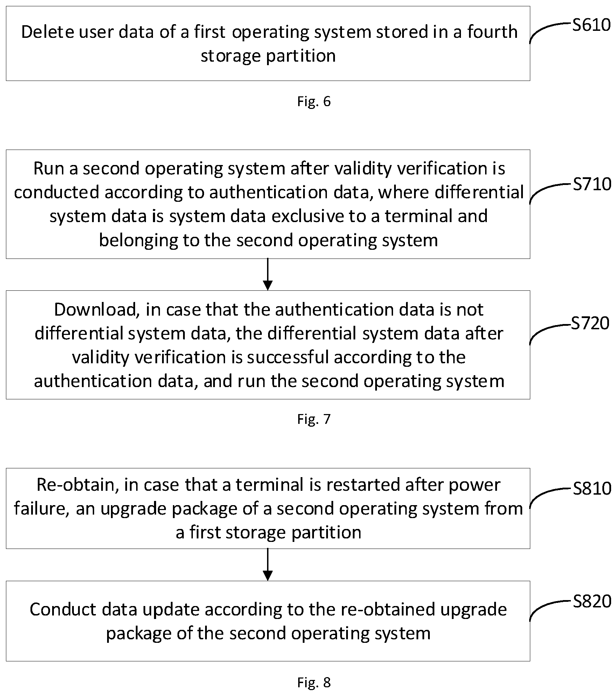

In addition, in an example, the terminal further includes at least one fourth storage partition. The fourth storage partition is configured to store general system data and/or user data of a first operating system. With reference to Fig. 6, after S430 of the example shown in Fig. 4 is executed, the method further includes, but is not limited to, the following step:
S610, the user data of the first operating system stored in the fourth storage partition is deleted.

It should be noted that user data of different operating systems is generally incompatible. In order to improve a use ratio of the storage partitions, the user data of the old operating system may be deleted after the operating system is switched to a new operating system.

It is worth noting that the fourth storage partition is exclusive to the first operating system, such that a partition for storing the user data may be directly emptied, thus improving efficiency of data processing.

In addition, in an example, with reference to Fig. 7, the step that S430 shown in Fig. 4 is executed further includes, but is not limited to, the following step:
S710, in case that the authentication data is differential system data of the second operating system, the second operating system is run after validity verification is conducted according to the authentication data, where the differential system data is system data exclusive to the terminal and belonging to the second operating system; and
   alternatively,
S720, in case that the authentication data is not differential system data, the differential system data is downloaded after validity verification is successful according to the authentication data, and the second operating system is run.

It should be noted that under a same operating system, system data of different terminals generally includes general system data and differential system data. The general system data is same system data in each terminal, and may be downloaded through the upgrade package and updated to the corresponding storage partition. The differential system data is system data required by the second operating system, and is exclusive to each terminal. The differential system data is not generally used by all terminals, so the differential system data needs to be downloaded separately. In a case that the authentication data is the differential system data, it may be determined that the terminal has the differential system data, such that the second operating system may be directly run. In a case that the authentication data is not differential data, it may be determined that the terminal lacks the differential system data, and the terminal may download the differential system data from the server after the server completes validity verification through the authentication data. Thus, security of data is effectively improved, and it is ensured that the terminal has all system data required by the second operating system.

It should be noted that the authentication data may be pre-burned to the third storage partition before the terminal leaves a factory, or downloaded in the upgrade process. For instance, with reference to Fig. 3, the first operating system is a Linux system, and the second operating system is an ATV system. The authentication data of the ATV system may be the Widevine Key, and the Widevine Key needs to be obtained after an ATV project is established, and may not be obtained when the terminal is produced. In this case, since the terminal may store the CA certificate in the CA partition, the Widevine Key may be applied and transmitted to the server according to the CA certificate after an upgrade instruction of the ATV operating system is obtained. After the server verifies that the terminal is a valid terminal according to the CA certificate, the corresponding Widevine Key may be transmitted and saved to the RPMB partition for use in a later upgrade process.

It should be noted that, under a same operating system, system data of different terminals generally includes general system data and differential system data. The general system data is same system data of each terminal, and the differential system data is different system data of each terminal. The general system data may be carried by the upgrade package and updated to the corresponding storage partition, but the upgrade package is generally provided by the server in a one-to-many manner. Thus, it is difficult to carry the differential system data of each terminal in the upgrade package. In this way, after device authentication of the terminal is completed in the server according to the authentication data, the differential system data of the terminal is downloaded from the server and updated to the corresponding partition, such that the second operating system has complete system data. Meanwhile, the differential system data is exclusive to each terminal, so the authentication data may be determined from the differential system data, so as to distinguish each terminal. For instance, the Widevine Key may be downloaded in the differential system data, and configured to verify validity of the terminal after downloading. After validity verification is successful, it may be determined that the terminal completes upgrade and update of the differential system data and the general system data, and the second operating system may be normally run.

In addition, in an example, with reference to Fig. 8, before S420 shown in Fig. 4 is executed, the method further includes, but is not limited to, the following steps:
S810, in case that the terminal is restarted after power failure, the upgrade package of the second operating system is re-obtained from the first storage partition; and
S820, data update is conducted according to the re-obtained upgrade package of the second operating system.

It should be noted that the upgrade package of the second operating system is stored in a nonvolatile first storage partition, so power failure cannot cause loss of original data of the upgrade package. Even if related data is stored in an internal storage in an update process of the upgrade package, only loss of data in the internal storage may be caused by power failure. The original data of the upgrade package is still stored in the first storage partition, and the data may be re-updated, such that feasibility of upgrade cannot be influenced, and data security and upgrade stability can be effectively improved.

In order to better illustrate the technical solution of the disclosure, two specific instances will be given below:

### Instance 1:

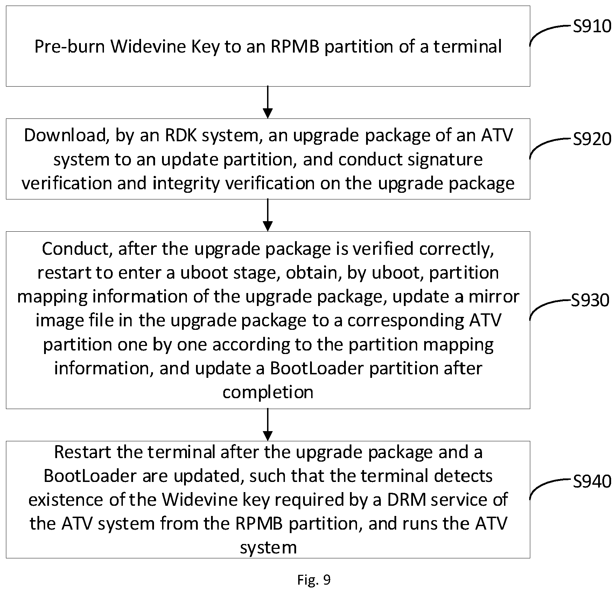

In the instance, with a case that a set-top box is upgraded from an RDK operating system to an ATV operating system as an instance, a partition condition of a file system in the set-top box is as shown in Fig. 2, includes an update partition 110, a BootLoader partition 210, and an RPMB partition 310, and further includes an RDK partition 410 or an ATV partition 510. The update partition 110, the BootLoader partition 210 and the RPMB partition 310 are shared by the RDK operating system and the ATV operating system, and have a consistent partition size and offset. The authentication data of the instance is Widevine Key. With reference to Fig. 9, instance 1 includes, but is not limited to, the following steps:
S910, Widevine Key is pre-burned to an RPMB partition of a terminal.
S920, an RDK system downloads an upgrade package of an ATV system to an update partition, and signature verification and integrity verification are conducted on the upgrade package.
S930, after the upgrade package is verified correctly, restart is conducted to enter a uboot stage, uboot obtains partition mapping information of the upgrade package, a mirror image file in the upgrade package is updated to a corresponding ATV partition one by one according to the partition mapping information, and a BootLoader partition is updated after completion.
S940, after the upgrade package and a BootLoader are updated, the terminal is restarted, such that the terminal detects existence of the Widevine key required by a DRM service of the ATV system from the RPMB partition, and runs the ATV system.

### Instance 2:

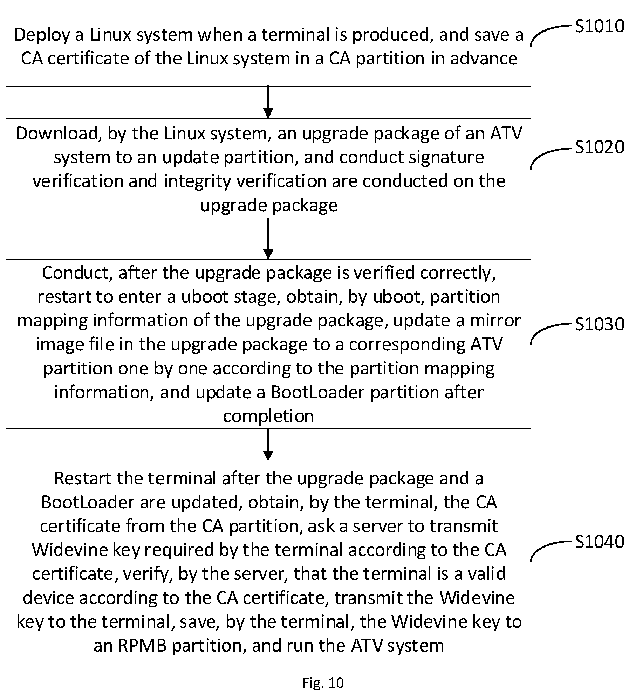

In the instance, with a case that a set-top box is upgraded from a Linus operating system to an ATV operating system as an instance, a partition condition of a file system in the set-top box is as shown in Fig. 2, includes an update partition 110, a BootLoader partition 210, an RPMB partition 310, and a CA partition 320, and further includes a Linus partition 420 or an ATV partition 510. The update partition 110, the BootLoader partition 210 and the RPMB partition 310 are shared by the Linus operating system and the ATV operating system, and have a consistent partition size and offset. Widevine Key of the ATV operating system is not pre-burned in the RPMB partition 310, and authentication data of the Linux system uses a CA certificate as an instance. With reference to Fig. 10, instance 2 includes, but is not limited to, the following steps:
S1010, the Linux system is deployed when a terminal is produced, and the CA certificate of the Linux system is saved in the CA partition in advance.
S1020, the Linux system downloads an upgrade package of the ATV system to the update partition, and signature verification and integrity verification are conducted on the upgrade package.
S1030, after the upgrade package is verified correctly, restart is conducted to enter a uboot stage, uboot obtains partition mapping information of the upgrade package, a mirror image file in the upgrade package is updated to a corresponding ATV partition one by one according to the partition mapping information, and a BootLoader partition is updated after completion.
S1040, after the upgrade package and a BootLoader are updated, the terminal is restarted, the terminal obtains the CA certificate from the CA partition, a server is asked to transmit the Widevine key required by the terminal according to the CA certificate, the server verifies that the terminal is a valid device according to the CA certificate and transmits the Widevine key to the terminal, the terminal saves the Widevine key to the RPMB partition, and the ATV system is run.

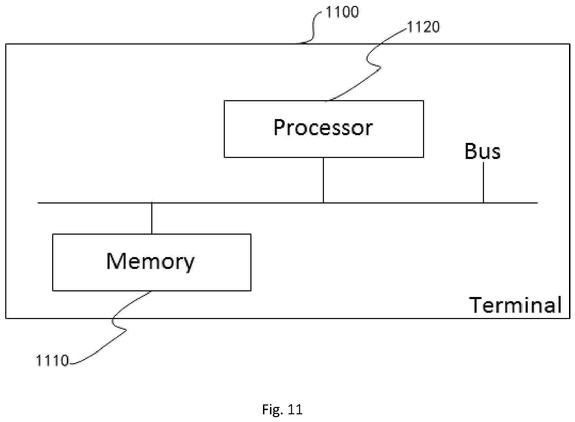

In addition, with reference to Fig. 11, one example of the disclosure further provides a terminal. The terminal 1100 includes: a memory 1110, a processor 1120, and a computer program stored in the memory 1110 and runnable on the processor 1120.

The processor 1120 and the memory 1110 may be connected to each other through a bus or in other manners.

A non-transitory software program and an instruction required for the operating system switching method of the example are stored in the memory 1110, and cause the operating system switching method in the example executed when executed by the processor 1120. For instance, S410 to S430 of the method in Fig. 4, S510 to S520 of the method in Fig. 5, S610 of the method in Fig. 6, S710 to S720 of the method in Fig. 7, S810 to S820 of the method in Fig. 8, S910 to S940 of the method in Fig. 9 and S1010 to S1040 of the method in Fig. 10 are executed.

The apparatus examples described above are merely illustrative. Units described as separate components may be physically separated or not. That is, the units may be located at one place, or distributed on a plurality of network units respectively. Some or all modules may be selected according to actual needs, so as to achieve the objective of the solution of the example.

In addition, one example of the disclosure further provides a computer-readable storage medium. The computer-readable storage medium stores a computer-executable instruction. The computer-executable instruction is executed by one processor or controller, and for instance, is executed by one processor in the example of the terminal, such that the operating system switching method in the example may be executed by the processor. For instance, S410 to S430 of the method in Fig. 4, S510 to S520 of the method in Fig. 5, S610 of the method in Fig. 6, S710 to S720 of the method in Fig. 7, S810 to S820 of the method in Fig. 8, S910 to S940 of the method in Fig. 9 and S1010 to S1040 of the method in Fig. 10 are executed.

An example of the disclosure includes: a first storage partition configured to store upgrade packages, where an upgrade package of a second operating system is downloaded to the first storage partition through a first operating system after a system switching instruction is obtained by the terminal, the first operating system is an operating system currently run by the terminal, and the second operating system is an operating system that the terminal can switch to; a second storage partition configured to store a boot loader (BootLoader), where the terminal finally updates the BootLoader stored in the second storage partition to a BootLoader of the second operating system in an upgrade and update process according to the upgrade package of the second operating system; and a third storage partition configured to store authentication data, where the authentication data is configured to authenticate validity of the terminal, such that the terminal runs the second operating system after validity verification is successful. According to the technical solution of the example, the upgrade package may be stored in the first storage partition, and the BootLoader may be finally updated in the upgrade process. Thus, data loss after power failure is effectively avoided, system switching can be conducted after validity verification is conducted on a device of the terminal according to the authentication data, and integrity of data can be effectively ensured, such that stability of system switching is improved.

It may be understood by those of ordinary skill in the art that all or some steps and the system in the method disclosed above may be implemented as software, firmware, hardware and their appropriate combinations. Some or all physical components may be implemented as software executed by a processor, and for instance, a central processing unit, a digital signal processor, or a microprocessor, implemented as hardware, or implemented as an integrated circuit, and for instance, an application-specific integrated circuit. Such software may be distributed on the computer-readable medium. The computer-readable medium may include a computer storage medium (or a non-transitory medium) and a communication medium (or a transitory medium). As well known to those of ordinary skill in the art, the term "computer storage medium" includes volatile, nonvolatile, removable or non-removable media implemented in any method or technology configured to store information (such as a computer-readable instruction, a data structure, a program module, or other data). The computer storage medium includes, but is not limited to, a random access memory (RAM), a read only memory (ROM), an electrically erasable programmable read-only memory (EEPROM), a flash memory or other memory technologies, a compact disc read-only memory (CD-ROM), a digital versatile disc (DVD) or other optical disk storages, a magnetic cassette, a magnetic tape, a magnetic disk storage or other magnetic storage apparatuses, or any other medium that may be configured to store desired information and may be accessed by a computer. Further, it is well known to those of ordinary skill in the art that the communication medium generally includes the computer-readable instruction, the data structure, the program module or other data in, for instance, a carrier wave or a modulated data signal of other transmission mechanisms, and may include any information delivery medium.

What is described above is specific description of some implementations of the disclosure, but the disclosure is not limited to the embodiments. Those familiar with the art can make various equivalent variations or substitutions without violating the scope of the disclosure, and the equivalent variations or substitutions are included in the scope defined by the claims of the disclosure.

## Claims

1. A terminal, comprising:
a first storage partition configured to store upgrade packages, wherein an upgrade package of a second operating system is downloaded to the first storage partition through a first operating system after a system switching instruction is obtained by the terminal, the first operating system is an operating system currently run by the terminal, and the second operating system is an operating system that the terminal can switch to;
a second storage partition configured to store a boot loader (BootLoader), wherein the terminal finally updates the BootLoader stored in the second storage partition to a BootLoader of the second operating system in an upgrade and update process according to the upgrade package of the second operating system; and
a third storage partition configured to store authentication data, wherein the authentication data is configured to authenticate validity of the terminal, such that the terminal runs the second operating system after validity verification is successful.

2. The terminal according to claim 1, wherein
the authentication data is differential system data, wherein the differential system data is system data exclusive to the terminal and belonging to the second operating system; and alternatively,
the authentication data is not differential system data, and the differential system data is downloaded after validity verification is conducted by the terminal according to the authentication data.

3. The terminal according to claim 2, wherein
the second storage partition and the third storage partition are shared by at least the first operating system and the second operating system; and
each second storage partition has consistent storage space attributes, each third storage partition has consistent storage space attributes, and the storage space attributes comprise a storage space size and an offset.

4. The terminal according to any one of claims 1 to 3, further comprising:
at least one fourth storage partition, wherein the fourth storage partition is configured to store general system data and/or user data of the first operating system, the fourth storage partition is exclusive to the first operating system, and the general system data is system data generally used by different terminals; and
alternatively,
at least one fifth storage partition, wherein the fifth storage partition is configured to store general system data and/or user data of the second operating system, and the fifth storage partition is exclusive to the second operating system.

5. An operating system switching method, applied to the terminal according to any one of claims 1 to 4, comprising:
downloading, in response to obtaining a system switching instruction, an upgrade package of a second operating system through a first operating system, and storing the upgrade package in a first storage partition, wherein the first operating system is an operating system currently run by the terminal, and the second operating system is an operating system that the terminal can switch to;
conducting upgrade and update according to the upgrade package of the second operating system, and finally updating a BootLoader stored in a second storage partition to a BootLoader of the second operating system; and
obtaining authentication data from a third storage partition, and running the second operating system after validity verification is conducted according to the authentication data.

6. The method according to claim 5, wherein the terminal further comprises at least one fifth storage partition, the fifth storage partition is configured to store general system data and/or user data of the second operating system, the general system data is system data generally used by different terminals, and conducting data update according to the upgrade package of the second operating system comprises:
obtaining partition mapping information, wherein the partition mapping information records a distribution of the general system data of the second operating system in the at least one fifth storage partition; and
updating a mirror image file of each piece of general system data in the upgrade package of the second operating system to the corresponding fifth storage partition according to upgrade partition mapping information.

7. The method according to claim 6, wherein the terminal further comprises at least one fourth storage partition, the fourth storage partition is configured to store general system data and/or user data of the first operating system, and after running the second operating system, the method further comprises:
deleting the user data of the first operating system stored in the fourth storage partition.

8. The method according to claim 5, wherein running the second operating system after validity verification is conducted according to the authentication data comprises:
running, in case that the authentication data is differential system data of the second operating system, the second operating system after validity verification is conducted according to the authentication data, wherein the differential system data is system data exclusive to the terminal and belonging to the second operating system; and
alternatively,
downloading, in case that the authentication data is not differential system data, the differential system data after validity verification is successful according to the authentication data, and running the second operating system.

9. The method according to claim 5, wherein before updating a BootLoader stored in a second storage partition to a BootLoader of the second operating system, the method further comprises:
re-obtaining, in case that the terminal is restarted after power failure, the upgrade package of the second operating system from the first storage partition; and
conducting data update according to the re-obtained upgrade package of the second operating system.

10. A terminal, comprising: a memory, a processor, and a computer program stored in the memory and runnable on the processor, wherein when the computer program is executed by the processor, the operating system switching method according to any one of claims 5 to 9 is implemented.

11. A computer-readable storage medium, storing a computer-executable instruction, wherein the computer-executable instruction is configured to execute the operating system switching method according to any one of claims 5 to 9.
